# EUROPÄISCHE PATENTANMELDUNG

(11) **EP 0 875 408 A2**
(43) Veröffentlichungstag der Anmeldung: **04.11.1998**
(21) Anmeldenummer: 98103769.0
(22) Anmeldetag: 04.03.1998
(51) Int. Cl.: B60J 3/02

(54) **Lagerböckchen für Fahrzeugsonnenblenden**

(30) Priorität: 02.05.1997 DE 19718693
(71) Anmelder: BECKER GROUP EUROPE GmbH, 42285 Wuppertal (DE)
(72) Erfinder: Jacquemin, Didier, 70300 Luxeuil Les Bains (FR)

(57) **Zusammenfassung**

Lagerböckchen für Fahrzeugsonnenblenden, das zwei eine Sonnenblendenachse (19) klammerartig umgreifende Arme aufweist, deren einander zugewandten Seiten eine hinterschnittene Lageröffnung für die Sonnenblendenachse (19) und einen deren wiederholtes Einstecken in die Lageröffnung ermöglichenden Einführschlitz bilden, wobei der erste Arm an einem Grundkörper (1) und der zweite Arm an einem damit über ein Filmscharnier (6) verbundenen Ergänzungskörper ausgebildet ist und sich zwischen dem Grundkörper und dem Ergänzungskörper, die gemeinsam das Gegenlagerböckchen bilden, eine Feder (3) befindet.

## Beschreibung

Die Erfindung betrifft ein Lagerböckchen für Fahrzeugsonnenblenden, das zwei eine Sonnenblendenachse klammerartig umgreifende Arme aufweist, deren einander zugewandten Seiten eine hinterschnittene Lageröffnung für die Sonnenblendenachse und einen deren wiederholtes Einstecken in die Lageröffnung ermöglichenden Einführschlitz bilden, wobei der erste Arm an einem Grundkörper und der zweite Arm an einem damit über ein Filmscharnier verbundenen Ergänzungskörper ausgebildet ist und sich zwischen dem Grundkörper und dem Ergänzungskörper, die gemeinsam das Lagerböckchen bilden, eine Feder befindet.

Ein derartiges Lagerböckchen ist in der deutschen Patentschrift 44 42 133 derselben Anmelderin beschrieben. Bei diesem Lagerböckchen weist der Grundkörper eine Stecköffnung für den Ergänzungskörper auf, wobei vom Boden der Stecköffnung ein aufrecht stehender Zapfen ausgeht, der mit einer auch den Grundkörper durchsetzenden Bohrung versehen ist. Der Ergänzungskörper ist mit einem rohrförmigen Ansatz ausgebildet, der den Zapfen übergreift und sich auf dem Boden der Stecköffnung abstützt, so daß sich in die Bohrung eine den Grundkörper durchsetzende Schraube als Befestigungselement eindrehen läßt, mittels derer die Festlegung des Ergänzungskörpers am Grundkörper wie auch die Festlegung des Lagerböckchens an der Fahrzeugkarosserie erfolgt. Zwischen dem Zapfen und dem rohrförmigen Ansatz ist die als Schraubendruckfeder ausgeführte Feder angeordnet, die sich mit ihrem einen Ende an einem Anschlag im Inneren des rohrförmigen Ansatzes und mit ihrem anderen Ende am Kopf der Schraube abstützt. Der Grundkörper ist mit dem Ergänzungskörper als einstückiges Kunststoffspritzgußteil mit einer Lasche als Verbindungsglied und einem Filmscharnier in der Lasche als Klappgelenk ausgeführt. Durch das Federsystem wird ein problemloses Ein- und Ausrasten der Sonnenblendenachse sowohl bei besonders niedrigen Temperaturen als auch bei besonders hohen Temperaturen erreicht, wobei eine temperaturunabhängige, stets gleichbleibende Haltekraft gewährleistet ist und darüberhinaus ein Ausgleich von Fertigungstoleranzen ermöglicht wird.

Obgleich sich dieses Lagerböckchen in der Praxis hervorragend bewährt hat, besteht ein Verbesserungsbedürfnis, insbesondere in Bezug auf eine Vereinfachung der Herstellung und der Montage.

Der vorliegenden Erfindung liegt daher das Problem zugrunde, ein Lagerböckchen der eingangs genannten Art so zu verbessern, daß die Herstellung und die Montage an einer Fahrzeugkarosserie vereinfacht werden.

Ausgehend von dieser Problemstellung wird bei einem Lagerböckchen der eingangs erwähnten Art erfindungsgemäß vorgeschlagen, daß der Grundkörper eine Öffnung für den Ergänzungskörper aufweist, der Ergänzungskörper mit einem Ansatz ausgebildet ist, der in einen Freiraum eines Fortsatzes am Grundkörper eingreift und sich mittels einer Verhakung abstützt, der Fortsatz Spreizarme zur Festlegung des Lagerböckchens in einer Fahrzeugkarosserieöffnung aufweist, die auch zur Festlegung des Ergänzungskörpers am Grundkörper dienen, wobei zwischen dem Grundkörper und dem Ergänzungskörper im Bereich zwischen dem Filmscharnier und dem Ansatz die als Biegefeder ausgeführte Feder angeordnet ist, die sich mit einem Schenkel im Grundkörper und mit ihrem anderen Schenkel am Ergänzungskörper abstützt.

Die bei dem Lagerböckchen gemäß der deutschen Patentschrift 44 42 133 vorgesehene Schraubendruckfeder ist gemäß der vorliegenden Erfindung durch eine einfache Biegefeder ersetzt, und die bei dem Lagerböckchen gemäß dieser Patentschrift erforderliche Schraube, die zur Festlegung des Ergänzungskörpers am Grundkörper wie auch zur Festlegung des Lagerböckchens an der Fahrzeugkarosserie erforderlich ist, ist entfallen, da der Grundkörper und der Ergänzungskörper mittels einer Verhakung miteinander verbunden sind und die Spreizarme am Fortsatz zur Festlegung des Lagerböckchens an einer Fahrzeugkarosserieöffnung dienen, die sich hinter der Fahrzeugkarosserieöffnung spreizen und ein Verrasten des Fortsatzes in der Karosserieöffnung bewirken.

Auf diese Weise wird die Herstellung des Lagerböckchens erheblich vereinfacht, und es läßt sich ohne Hilfsmittel und Werkzeuge an einer Fahrzeugkarosserie montieren.

Vorzugsweise kann der Spreizschenkel einen Absatz zum Untergreifen einer Kante eines Karosserieblechs und vom Absatz ausgehend eine schmalere Verlängerung mit einem Quersteg aufweisen, wobei zwei Haken am Ansatz den Quersteg beiderseits der Verlängerung untergreifen.

Um dem Ansatz eine für die Montage und Halterung ausreichende Elastizität zu geben, kann der Ansatz vorzugsweise aus drei parallelen Schenkeln bestehen, von denen der mittlere ohne Haken ausgebildet ist.

Wenn die Biegefeder mit einem Schenkel in einem Schlitz im Grundkörper befestigt ist und der andere Schenkel so doppelt abgebogen ist, daß er im Bereich des Freiraums endet, wird eine besonders günstige Abstützung erreicht, die bei allen Temperaturen wirksam ist und für einen Toleranzausgleich sorgt.

Die Erfindung wird nachstehend anhand mehrerer in der Zeichnung dargestellter Ausführungsbeispiele des näheren erläutert. In der Zeichnung zeigen:
- Fig. 1: eine Schnittansicht des erfindungsgemäßen Lagerböckchens vor dem Zusammenbau und der Montage in einer Karosserieöffnung gemäß einer ersten Ausführungsform,
- Fig. 2: eine Schnittansicht eines fertig montierten, erfindungsgemäßen Lagerböckchens gemäß Fig. 1 mit eingerasteter Lagerachse und
- Fig. 3: eine Schnittansicht eines fertig montierten Lagerböckchens mit eingerasteter Gegenlagerachse gemäß einer zweiten Ausführungsform.

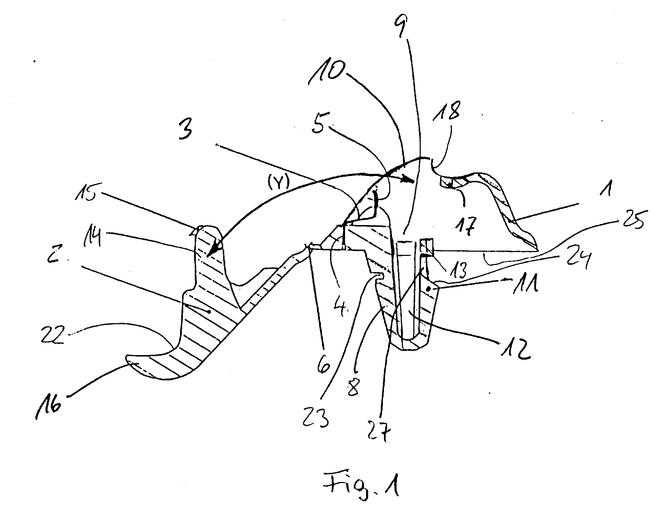

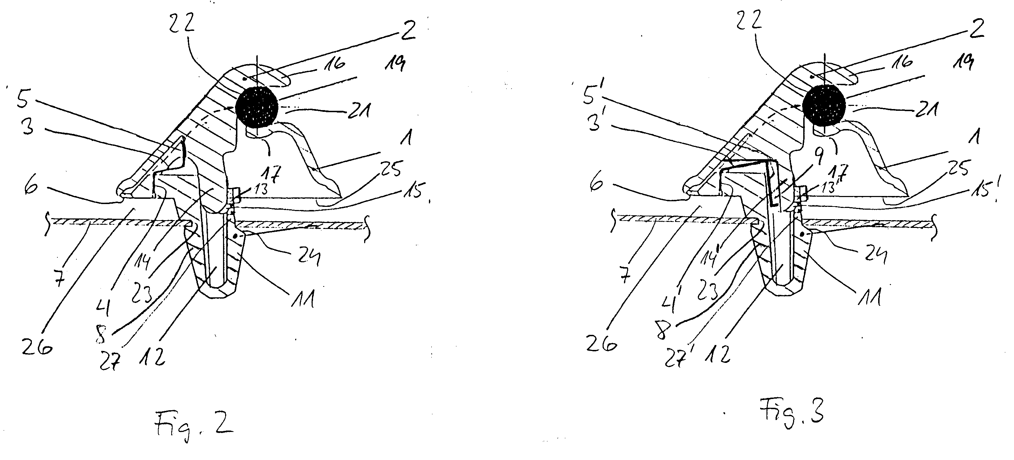

Das Lagerböckchen besteht aus einem Grundkörper 1, einem damit einstückig als Kunststoffteil ausgebildeten Ergänzungskörper 2 und einer Biegefeder 3. Eine den Verbindungsbereich zwischen dem Grundkörper 1 und dem Ergänzungskörper 2 querende Materialeinschnürung bildet ein Filmscharnier 6 als Klappgelenk, womit es möglich ist, den Ergänzungskörper 2 aus seiner in Fig. 1 dargestellten Ausgangslage in seine Gebrauchslage gemäß Fig. 2 und 3 zu klappen.

In einen Schlitz im Grundkörper 1 ist ein Schenkel 4 einer Biegefeder 3 eingesetzt, deren nach oben ragender Schenkel 5 die Abstützung gegenüber dem Ergänzungskörper 2 übernimmt.

Am Grundkörper 1 ist ein Fortsatz 8 angeordnet, der mit einem Querschlitz 23 versehen ist, in den eine Kante einer Öffnung in einem Karosserieblech 7 in der in Fig. 2 und 3 dargestellten Weise eingreifen kann. Der Grundkörper 1 weist eine Öffnung 10 auf, in die sich der Ergänzungskörper 2 entsprechend der Darstellung in Fig. 2 und 3 entlang dem Pfeil Y klappen läßt. Dabei gelangt ein Ansatz 14 am Ergänzungskörper 2 in einen Freiraum 9 zwischen dem Fortsatz 8 und mit diesem einstückig verbundenen Spreizarmen 11, 12. Dabei rastet ein Haken 15 gemäß Fig. 2 in eine Öffnung 13 in einer Verlängerung 27 des Spreizarms 11 ein und untergreift ein Absatz 24 die dem Schlitz 23 gegenüberliegende Kante der Karosserieöffnung, so daß das Lagerböckchen gegen Herausziehen aus dem Karosserieblech 7 gesichert ist. Zwischen einer Auflagefläche 27 am Grundkörper 1 und dem Karosserieblech 7 liegt ein Zwischenraum 26, der durch ein elastisches Material, z. B. einen Dachhimmel, ausgefüllt ist.

Ein Arm 16 am Ergänzungskörper 2, der über eine Hohlkehle 22 in den eigentlichen Ergänzungskörper 2 übergeht und ein Arm 17, der durch eine Kehle 18 am Grundkörper 1 abgeschlossen wird, bilden in der in Fig. 2 und 3 dargestellten Gebrauchsstellung eine Lageröffnung mit einem Einführschlitz 21 für eine Sonnenblendenachse 19.

Durch die Abstützung der Feder 3 mit ihrem einen Schenkel 4 am Grundkörper 1 und mit ihrem anderen Schenkel 5 am Ergänzungskörper 2 wird erreicht, daß sich die Sonnenblendenachse 19 temperaturunabhängig und ohne daß sich Fertigungstoleranzen im besonderen Maße bemerkbar machen, leicht in den Einführschlitz 21 einführen und daraus herausbewegen läßt und in der Lageröffnung klapperfrei sitzt.

Fig. 3 zeigt eine andere Ausführungsform der Biegefeder 3' und des Ansatzes 14'. Bei der in Fig. 3 dargestellten Ausführungsform ist die Biegefeder 3' doppelt abgebogen, wobei der Schenkel 4', genau wie in Fig. 2 dargestellt, in einen Schlitz im Grundkörper 1 befestigt ist, während der Schenkel 5' in den Freiraum 9 zwischen dem Ansatz 14' und dem Fortsatz 8 hineinragt. Der Fortsatz 14' ist dementsprechend schmaler ausgeführt und besteht aus drei parallelen Schenkeln, von denen die beiden äußeren Schenkel Haken 15' aufweisen, während der mittlere Schenkel keinen Haken aufweist. Die Haken 15' an den beiden äußeren Schenkeln untergreifen einen Quersteg 13', der an der Verlängerung 27 angeordnet ist. Die Verlängerung 27 ist schmaler als der Spreizarm 11, so daß die Haken 15' den Quersteg 13' beiderseits der Verlängerung 27' hintergreifen können.

## Patentansprüche

1. Lagerböckchen für Fahrzeugsonnenblenden,
- das zwei eine Sonnenblendenachse (19) klammerartig umgreifende Arme (16, 17) aufweist,
- deren einander zugewandten Seiten eine hinterschnittene Lageröffnung für die Sonnenblendenachse (19) und einen deren wiederholtes Einstecken in die Lageröffnung (20) ermöglichenden Einführschlitz (21) bilden, wobei
- der erste Arm (17) an einem Grundkörper (1) und der zweite Arm (16) an einem damit über ein Filmscharnier verbundenen Ergänzungskörper (2) ausgebildet ist und
- sich zwischen dem Grundkörper (1) und dem Ergänzungskörper (2), die gemeinsam das Lagerböckchen bilden, eine Feder (3) befindet,
- der Grundkörper (1) eine Öffnung (10) für den Ergänzungskörper (2) aufweist,
- der Ergänzungskörper (2) mit einem Ansatz (14, 14') ausgebildet ist, der in einen Freiraum (9) eines Fortsatzes (8) am Grundkörper (1) eingreift und sich mittels einer Verhakung (13, 15; 13', 15') abstützt,
- der Fortsatz (8) Spreizarme (11, 12) zur Festlegung des Lagerböckchens in einer Fahrzeugkarosserieöffnung aufweist, die
- auch zur Festlegung des Ergänzungskörpers (2) am Grundkörper (1) dienen, wobei
- zwischen dem Grundkörper (1) und dem Ergänzungskörper (2) im Bereich zwischen dem Filmscharnier (6) und dem Ansatz (14, 14') die als Biegefeder ausgeführte Feder (3, 3') angeordnet ist,
- die sich mit einem Schenkel (4, 4') im Grundkörper (1) und mit ihrem anderen Schenkel (5, 5') am Ergänzungskörper (2) abstützt.

2. Lagerböckchen nach Anspruch 1, **dadurch gekennzeichnet**, daß der Spreizschenkel (11) einen Absatz (24) zum Untergreifen einer Kante eines Karosserieblechs (7) und vom Absatz (24) ausgehend eine schmalere Verlängerung (27) mit einem Quersteg (13') aufweist und zwei Haken (15') am Ansatz (14) den Quersteg (13') beiderseits der Verlängerung (27) untergreifen.

3. Lagerböckchen nach Anspruch 2, **dadurch gekennzeichnet**, daß der Ansatz (14') aus drei parallelen Schenkeln besteht, von denen der mittlere ohne Haken (15') ausgebildet ist.

4. Lagerböckchen nach Anspruch 1, 2 oder 3, **dadurch gekennzeichnet**, daß ein Schenkel (4') der Biegefeder (3') in einen Schlitz am Grundkörper (1) befestigt ist und der andere Schenkel (5') doppelt abgebogen im Bereich des Freiraums (9) endet.
